Europäisches Patentamt

(19) European Patent Office

Office européen des brevets

(11) Publication number : **0 446 163 A1**

(12) # EUROPEAN PATENT APPLICATION

(21) Application number : 91500023.6

(22) Date of filing : 07.03.91

(51) Int. Cl.⁵ : **G08G 1/16,** G08G 1/0965, B60Q 1/52

(30) Priority : 09.03.90 ES 9000720
24.08.90 ES 9002255

(43) Date of publication of application :
**11.09.91 Bulletin 91/37**

(84) Designated Contracting States :
**AT BE CH DE DK FR GB GR IT LI LU NL SE**

(71) Applicant : Alejo Trevijano, José Javier
Ma. Teresa Gil de Garaete, No. 39-3o.D
E-26002 Logrono (La Rioja) (ES)

(72) Inventor : Alejo Trevijano, José Javier
Ma. Teresa Gil de Garaete, No. 39-3o.D
E-26002 Logrono (La Rioja) (ES)

(74) Representative : Gomez-Acebo y Pombo, José
Miguel
c/o CLARKE, MODET & Co. Paseo de la
Castellana 164
E-28046 Madrid (ES)

(54) **Inter-vehicle communication apparatus by means of infrared rays.**

(57)  Inter-vehicle communication apparatus by means of infrared rays. This consists of two transmitter-receiver pairs Ce, De, Cr, Dr communicating by infrared rays. Each pair has its emitter elements D-1, D-3 and sensors D-2 and D-4 at each extreme of the vehicle, in such a way that the front emitter D-1 is actuated by a push-button P-1 to warn the vehicle in front. The emitted infrared beam is picked up by this vehicle and an acoustic warning device A inside the car is actuated as a result, as is a confirmation emitter D-3. The signal sent by this emitter is in turn picked up by the front receiver D-2 of the vehicle behind, which prevents the horn B from being connected. If the confirmation signal is not received, the horn B of the vehicle behind is actuated by default. These transmitter-receivers can be supplemented with other miniaturized portable units to give permanent information on the vehicle's status.

FIG. 1

EP 0 446 163 A1

# INTER-VEHICULE COMMUNICATION APPARATUS BY MEANS OF INFRARED RAYS

This invention concerns an inter-vehicle communication apparatus by means of infrared rays. It consists of 2 emitter-receiver devices fitted to each vehicle in such a way that the vehicle travelling behind emits a beam of coded infrared rays which is picked up by the vehicle in front and converted into a warning signal. At the same time a return beam is generated by the front vehicle confirming reception of the first beam in order to determine whether or not the vehicle horn is to be used.

One of the greatest scourges of the modern world is ambient noise, which has reached levels that are truly dangerous, having an adverse effect on work conditions, reducing the quality of life and causing illnesses among people.

The means that are being implemented to tackle this problem do not seem to be sufficient, given that other new noise sources of a different nature are continually arising. This implies that the means being put into practice really do have to be effective and cut out the most frequent and damaging sources of noise.

One of the main focal points of ambient noise is vehicules, with our roads having to support more and more vehicules which are increasingly powerfully equipped. Unfortunately, people themselves by their own sheer willpower are, in many cases, unable to prevent the acoustic pollution created by vehicles. So what is needed is a totally automatic means of making it impossible for this pollution to be generated. Technology itself, which is the source of the noise, can and should prevent it. There are many means available today for doing this, means that have a high capability with none of them being expensive - electronic equipment for example.

The aim of the invention - an aim that it achieves with the apparatus described - is to reduce and, with sufficiently extensive application, eliminate acoustic pollution created by vehicle horns.

The apparatus can be fitted to all vehicles and consists of a double emitter-receiver located in each vehicle.

The front emitter has its terminal unit front axle of the vehicle and emits infrared rays in a forward beam which is detected by the infrared-sensing unit of the vehicle in front.

The rays emitted must be such that they cannot be affected either by ambient sunlight or by lights from vehicles themselves. For this reason, the rays are coded.

When the driver of the vehicle behind wants to warn the vehicle in front, he presses a push-button or the standard horn-push but, instead of the horn being operated, this action puts the infrared emitter into operation. At that moment, two things may happen, depending on whether or not the vehicle in front is fitted with the apparatus. If it does have the apparatus, the infrared receiver is actuated and decodes the received signal, which triggers an acoustic warning inside the vehicle - the sound of this warning is not transmitted outside the car. At the same time, this receiver generates a signal confirming that the vehicle in front is fitted with this device and at the same time preventing the horn of the vehicle behind from souding. Thus, acoustic pollution is cut out while at the same time the vehicle in front is warned.

In the second case, where the vehicle in front does not have a receiver, no confirmation signal is emitted and the vehicle horn is automatically operated - this occurs in an extremely short time interval. This manner of operating does not oppose the fight against pollution - on the contrary it allows the system to be compatible with the conventional method of warning by means of the horn. The use of the horn will be reduced as increasing numbers of apparatus are fitted.

If wished, an LED can be fitted to the emitter to indicate whixch is going to operate: the horn or the infrared rays, depending on the vehicle that happens to be in front. This is useful if the driver wishes to warn a vehicle that is to the side of his own vehicle since he can then use a push-button to operate the horn directly. In this case, the horn will be fitted with a timer so that the acoustic signal lasts for a minimal period.

To allow the apparatus to be used even in cases where there is no-one inside the vehicle that is going to be warned, as with badly parked vehicles, the signal received by a non-occupied vehicule can still be confirmed in order to prevent the horn from coming into operation. Furthermore, in these cases, the received signal causes a radio signal to be transmitted to the owner or user of the badly parked vehicle, alerting him to the fact that his vehicle is obstructing the normal flow of traffic.

All too often vehicles are left for a few minutes in places that impede the flow of traffic, so that the driver affected blows his horn persistently and continuously, creating an ambient noise even worse than the problems of slow traffic flow. This occurs when vehicles are double- or triple-parked, or badly parked in general.

As well as preventing acoustic ambient pollution, the invention helps the driver who leaves his vehicle badly parked because of emergency reasons to be constantly informed about his vehicle. Problems created for other traffic by bad parking will therefore be reduced, helping to keep the traffic flowing smoothly.

This is achieved by fitting the vehicle with a call receiver, or rear receiver (although it may be fitted to the side despite its name) as well as the devices described above, and also a low-power radioelectric transmitter suitably modulated and able to identify the vehicle. This radioelectric transmitter is connected to the vehicle's infrared receiver in such a way that it is actuated as soon as this receiver picks up the information from the vehicle being signalled.

The radioelectric signal is short range, in practice equivalent to the acoustic range of a good horn, and is picked up by the miniature radio receiver carried around by the user whenever he leaves the vehicle. The radio-electric signal is modulated in such a way that there is no interference from other users, and it can consist of coded pulses which allow a high number of different codings to be used. When the corresponding coded signal is received, a small acoustic warning device is set off, telling the user that his vehicle is obstructing another driver.

The different possible arrangements for the warning emitter are as follows:

  a) Miniature format portable infrared emitter with coded signal.

  b) Portable infrared emitter built-in to a miniature format housing along with the warning receiver.

  c) Emitter located forward of the communication equipment indicated above. In the event of traffic obstruction to the side (double parking), it becomes more difficult for the original rear receiver to pick up the signal, so that emitters a and b are, in practice, more useful.

Rear receiver pick-ups are also fitted to the vehicle's rear wings, so that they can more easily receive signals from the obstructed vehicle. There are various possibilities for positioning them since this depends on the body-shape of the vehicle, though the essential characteristics of the invention are unchanged.

In order to understand this invention better, a detailed description is given below with reference to the attached diagrams. In these diagrams:

Figure 1 shows a diagram of the apparatus units according to the invention. There are many ways for carrying out the internal design of these units. All use electronic circuitry commonly found on the market and have no special peculiarities.

Figure 2 is similar to figure 1, but with extra elements having been added so that communication is possible with vehicles not in front of the emitting vehicle.

Figure 3 shows an additional infrared emitter allowing signals to be emitted from outside the vehicule.

Figure 4 shows an infrared warning emitter and radioelectric receiver fitted inside a miniature portable housing so that signals can be emitted and received while remaining outside the vehicle.

Figure 5 shows a miniature radioelectric receiver that can pick up signals reaching the vehicle when one is outside the vehicle.

Figure 6 shows a knows a known infrared receiver unit to which the radioelectric transmitter has been added.

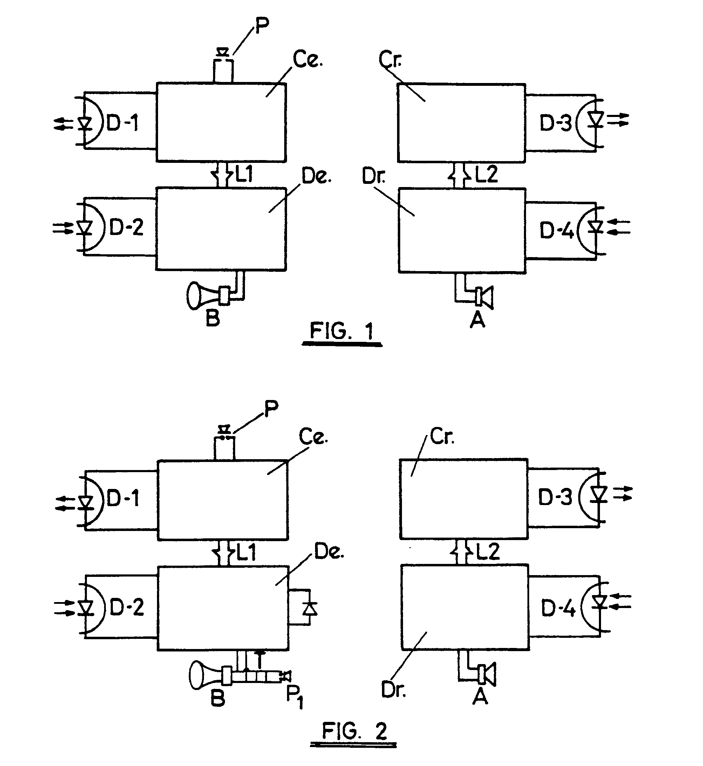

Referring to figure 1 and 2, it can be seen that the inter-vehicle communication equipment by means of infrared rays consists of two units, each of which has a D-1 diode of the electroluminescent type with radiation in the infrared spectrum. The diode is electrically excited by the codifier Ce, which is in turn actuated by the horn push-button, represented by P. The order emitted is made known to the receiver decodifier De via the connection loop L1. This decodifier receives the confirmation information from the vehicle in front via the photodiode D-2, which detects infrared rays. The vehicle horn B will be operated when the confirmation signal is not received in the decodifier De.

If the vehicle is question is the one receiving the signal, it will do this via the photodiode D-4 located in the rear of the vehicle, with the signal being decoded by Dr. This will actuate an acoustic warning A in the vehicle interior, thereby warning the driver. At the same time, the communication loop L2 will actuate the codifier Cr which will excite the emitter diode D-3 which, in its turr, will confirm to the vehicle behind that the warning has been received. This will then prevent the horn of the vehicle behind from being operated, thereby helping to prevent acoustic ambient pollution.

In figure 2, it can be seen that an optical warning device L has been provided to indicate whether or not the vehicle being warned is fitted with an infrared device. This warning device also indicates whether the horn or the infrared emitter will be actuated when the push-button P is pressed. If the indicator L shows that the infrared emitter is going to be used and it is wished to use the horn to give a warning, an auxiliary push-button P is provided for this. This push-button is fitted with a timer T to limit the horn's operating period.

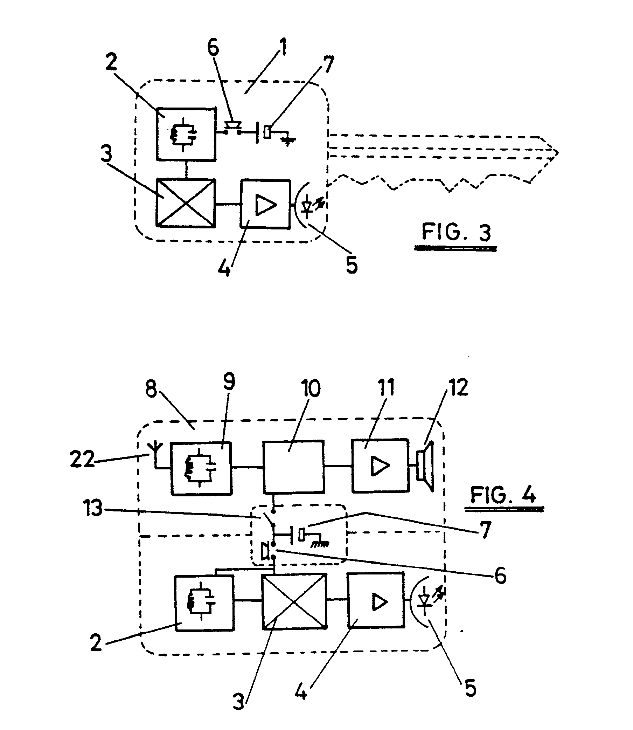

Figure 3 includes an additional infrared transmitter in the vehicle, which we could call the rear transmitter even though it may be fitted to the side so that vehicles on either side can be communicated with. An example of this would be when the driver is boxed in by a double-parked vehicule. As can be seen from the diagram, the transmitter can be located in the key housing and consists of a generator-oscillator 2, a codifier 3 and an amplifier 4, which excites a diode 5. The supply is via a push-button 6 by means of a cell 7.

Figure 4 shows an infrared warning emitter and a radioelectric receiver located inside a miniature housing 8. As with the above case, the emitter consists of an oscillator 2, a codifier 3 and an amplifier 4, which excites a diode 5. The radioelectric receiver, for its part, consists of the radioelectric receiver itself 9, a decodifier 10, a power amplifier 11 and an acoustic warning device 12. Both the emitter and the radioelectric receiver are supplied by a cell 7, the former via a push-button 6 and the latter via a switch 13.

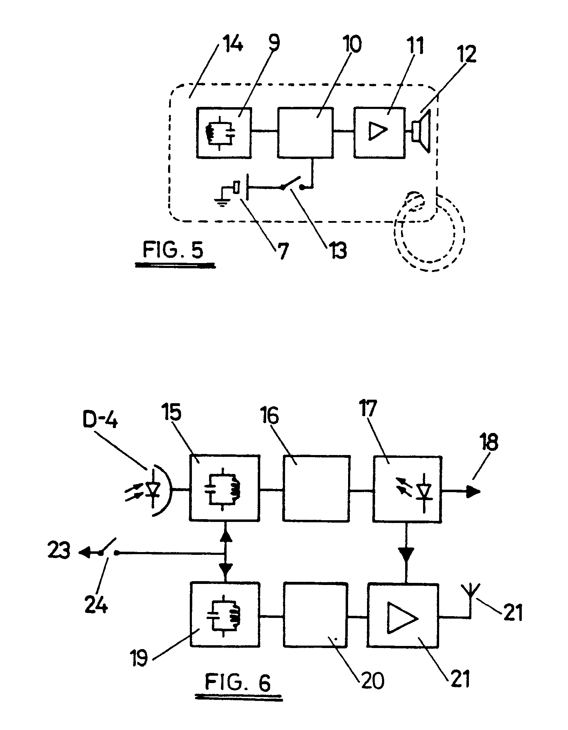

Figure 5 shows a radioelectric receiver in a housing 14 in the form of a key-ring, each constituent part being designated with the same references as those used for figure 4.

Finally, figure 6 includes an infrared sensor D-4 located in the rear and/or side of the vehicle. This receives the signal, which is filtered and amplified in the receiver 15. It is then decoded in the decodifier 16 and displayed in 17 by an LED diode, at the same time as the order is emitted to silence the horn by 18. The radioelectric transmitter includes an oscillator 19, a codifier 20, an amplifier 21 and an aerial 22. The whole unit is supplied from the vehicle battery via a switch 24.

## Claims

1.- Inter-vehicle communication apparatus by means of infrared rays, characterized by two infrared emitters stimulated by two codifiers, connected in turn to two decodifiers. The decodifiers actuate a horn and an acoustic warning device and are stimulated by two infrared ray pick-ups in such a way that, when a push-button is pressed, one of the emitters fitted to the front of the vehicle emits a beam of infrared rays which is received by the other vehicle's infrared sensor. Once decoded, this signal actuates the acoustic warning device and also a codifier, which in turn emits a coded infrared signal in a backward beam that is received by the first vehicle. This beam is decoded to confirm that the signal preventing the vehicle's horn from being operated has been received.

2.- Apparatus as per claim 1, characterized by push- button actuating the emission codifier is the same as the one that operates the vehicle horn.

3.- Apparatus as per claims 1 and 2, characterized by the fact that, if the no signal is received from the vehicle in front confirming reception of the coded signal triggered by the push-button, the reception decodifier of the vehicle behind puts the vehicle horn into operation.

4.- Apparatus as per claim 1, characterized by being fitted with an auxiliary push-button provided with a timer so that vehicles other than those in front can be warned acoustically, with an optical warning device indicating that the normal push-button will not operate the horn.

5.- Apparatus as per claim 1, characterized by being fitted with a radioelectric transmitter that emits a coded signal, and a portable radioelectric receiver for the coded signal. The radioelectric transmitter is connected to the rear infrared receiver of the vehicle in such a way that, when the corresponding signal is received from the infrared emitter of the obstructed vehicle, it triggers the radioelectric transmitter, the signal being picked up by the radioelectric receiver. This actuates a sound alarm, if it has the same coding, warning its user or the carrier.

6.- Apparatus as per claim 5, characterized by having different infrared receivers when the vehicle is left parked in an obstructive manner.

7.- Apparatus as per claim 5 and 6, characterized by having a further portable coded infrared emitter that can be used by the driver when the vehicle is obstructed.

8.- Apparatus as per claim 5, 6 and 7, characterized by the infrared transmitter and receiver being fitted into the same miniature portable housing.

9.- Apparatus as per claim 5 and 6, characterized by having infrared reception sensors fitted in the side wings of the vehicle for when it is left double parked.

FIG. 1

FIG. 2

FIG. 3

FIG. 4

FIG. 5

FIG. 6

**European Patent Office**

## EUROPEAN SEARCH REPORT

Application Number

EP 91 50 0023

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 204 435 (FARRELL et al.) <br> * figure 1; abstract; page 2, lines 29-35; page 4, lines 12-19 * <br> --- | 1,2,6,8 | G 08 G 1/16 <br> G 08 G 1/0965 <br> B 60 Q 1/52 |
| A | FR-A-2 628 586 (NEIMAN S.A.) <br> * figures 1,2; abstract; page 2, lines 1-14; page 3, lines 1-5 * <br> --- | 1 | |
| A | GB-A-1 433 048 (INTERNATIONAL STANDARD ELECTRIC CORP.) <br> * figure 1; page 2, lines 119-122; page 3, lines 55-64 * <br> --- | 1,3 | |
| A | US-A-2 188 293 (WILLIAMS) <br> * figure 2; page 2, left column, lines 11-23; page 3, left column, lines 40-53 * <br> --- | 6,9 | |
| A | US-A-3 394 342 (WALKER) <br> * figures 1,10; column 4, lines 36-48 * <br> ----- | 7 | TECHNICAL FIELDS SEARCHED (Int. Cl.5) <br><br> G 08 G <br> B 60 Q <br> G 08 B <br> G 01 S |

The present search report has been drawn up for all claims

| Place of search | Date of completion of the search | Examiner |
|---|---|---|
| BERLIN | 29-05-1991 | DANIELIDIS S |